(19) Europäisches Patentamt

European Patent Office

Office européen des brevets

(11) **EP 0 942 356 A2**

(12) **EUROPÄISCHE PATENTANMELDUNG**

(43) Veröffentlichungstag:
15.09.1999 Patentblatt 1999/37

(51) Int. Cl.[6]: **G06F 7/62**

(21) Anmeldenummer: 99104289.6

(22) Anmeldetag: 03.03.1999

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(30) Priorität: 11.03.1998 DE 19810576

(71) Anmelder:
**Max-Planck-Gesellschaft zur Förderung
der Wissenschaften e.V.**
**80539 München (DE)**

(72) Erfinder: **Wittenbecher, Klaus**
**85540 Haar (DE)**

(74) Vertreter: **Hertz, Oliver, Dr.**
**v. Bezold & Partner,**
**Patentanwälte**
**Akademiestrasse 7**
**80799 München (DE)**

(54) **Verfahren und Vorrichtung zur Frequenzmultiplikation oder -division**

(57) Zur Bildung einer Ausgangspulsfolge mit einer Frequenz $f_A$, die proportional zum Produkt der Frequenzen $f_1$ und $f_2$ einer ersten und einer zweiten Eingangspulsfolge ist, wird die Ausgangspulsfolge als sich mit einer Periode T wiederholende Signalfolge gebildet, die Pulssequenzen einer Sequenzdauer t enthält, die die Frequenz $f_1$ oder $f_2$ der ersten oder Eingangspulsfolge besitzen und deren Sequenzdauer t proportional zur Frequenz $f_2$ oder $f_1$ der zweiten oder ersten Eingangspulsfolge ist. Zur Bildung einer Ausgangspulsfolge mit einer Frequenz $f_A$, die proportional zum Quotienten der Frequenzen $f_1$ und $f_2$ einer ersten und einer zweiten Eingangspulsfolge ist, wird die Ausgangspulsfolge als sich mit einer Periode T wiederholende Signalfolge gebildet, die in jeder Periode T mindestens eine Pulssequenz einer Sequenzdauer enthält, die eine Referenzfrequenz $f_0$ besitzt und deren Sequenzdauer proportional zum Verhältnis der Frequenzen $f_1/f_2$ der ersten und zweiten Eingangspulsfolgen ist.

Fig. 1

**Beschreibung**

Die Erfindung betrifft ein Verfahren zur Frequenzmultiplikation oder -division im Echtzeitbetrieb. Die Erfindung betrifft auch eine Schaltung zur Implementierung des Verfahrens.

In der Meß- und Regeltechnik bestehen Problemstellungen, bei denen aus Meßgrößen ein Wert ermittelt oder zur Regelung verwendet werden soll, der dem Produkt oder den Quotienten der Meßgrößen entspricht. Ein Beispiel hierfür ist die Bestimmung einer elektrischen Leistung aus gemessenen Spannungs- und Stromwerten. Falls der Leistungswert, wie z.B. beim Betrieb eines Neutralteilchen-Injektors, möglichst schnell und verzögerungsfrei als Rückkopplungssignal zur Leistungsregelung benötigt wird, muß die Spannungs-Strom-Multiplikation möglichst im Echtzeitbetrieb durchgeführt werden. Derartige Multiplikationen (oder bei anderen Anwendungen: Divisionen) werden bislang mit Analogrechenschaltungen oder mit in diesem Zusammenhang zu aufwendigen, schnellen Rechnern durchgeführt.

Analogrechenschaltungen besitzen die folgenden Nachteile. Neben der Temperaturabhängigkeit und Störempfindlichkeit sind vor allem die Notwendigkeit eines Abgleichs und die systematische Rechenungenauigkeit problematisch. Außerdem werden bei zahlreichen Detektorsystemen die gemessenen Analogsignale vor einer Übertragung an ein Meß- und Auswertungssystem in eine charakteristische, proportionale Frequenz umgesetzt. Eine Rückumsetzung des Frequenzsignals in eine Eingangsgröße der Analogrechenschaltung wäre zeitaufwendig und würde zu zusätzlichen Ungenauigkeiten führen.

Es besteht daher ein Interesse daran, ein System zur digitalen Umsetzung einer Mehrzahl von Frequenzsignalen (Eingangspulsfolgen) in ein gemeinsames Frequenzsignal (Ausgangspulsfolge) zu schaffen, dessen Frequenz charakteristisch für das Produkt oder den Quotienten der Frequenzen der Eingangspulsfolgen ist.

Zur Frequenzmultiplikation sind bisher lediglich Schaltungen bekannt, mit denen eine Eingangsfrequenz mit einem konstanten Faktor multipliziert wird. Diese Schaltungen sind jedoch nicht zur Multiplikation mehrerer variabler Frequenzen geeignet. Entsprechendes gilt für die allgemein bekannten, fest einstellbaren Frequenzteiler (Multiplikation mit einem Faktor <1). Beispiele der Frequenzmultiplikation mit einem konstanten Faktor sind in der Publikation von H. Marguerre in "ELEKTRONIK", Heft 16, 1982, Seite 45 ff., und in der "RCA-Application Note" (ICAN-6739 (6.1975)) beschrieben.

Es ist die Aufgabe der Erfindung, ein Verfahren und Schaltungen zur Multiplikation und zur Division mehrerer variabler Frequenzen anzugeben. Die Multiplikation bzw. Division soll insbesondere mit geringem Schaltungsaufwand, schnell und mit hoher Genauigkeit durchführbar sein.

Diese Aufgabe wird durch Verfahren mit den Merkmalen gemäß den Patentansprüchen 1 bzw. 6 und durch Schaltungen mit den Merkmalen gemäß den Patentansprüchen 10 bzw. 13 gelöst. Vorteilhafte Ausführungsformen ergeben sich aus den abhängigen Ansprüchen.

Die Erfindung basiert auf der Idee, aus zwei Eingangspulsfolgen eine Ausgangspulsfolge zu konstruieren, die aus Pulssequenzen verschiedener Frequenzen zusammengesetzt ist und deren Frequenz im zeitlichen Mittel proportional zum Produkt bzw. zum Quotienten der Frequenzen der Eingangspulsfolgen ist. Die Ausgangspulsfolge ist eine sich mit einer Periode T wiederholende Signalfolge` die Pulssequenzen mit bestimmten Frequenzen und Sequenzdauern enthält. Je nach der auszuführenden Operation wird die Frequenz der Pulssequenzen durch eine oder abwechselnd durch beide der Frequenzen der Eingangspulsfolgen (Multiplikation) oder durch eine Referenzfrequenz (Division) gebildet. Die Sequenzdauer wird so gewählt, daß das Verhältnis der Sequenzdauer zur Periode T in linearem Zusammenhang zum Produkt bzw. zum Quotienten der Frequenzen der Eingangspulsfolgen steht. Aus den Frequenzen der Eingangspulsfolgen wird jeweils eine frequenzproportionale Zeitgröße ermittelt, wobei die Ausgabe der Pulssequenzen entsprechend dem Produkt oder dem Quotienten der Zeitgrößen erfolgt.

Das unten im einzelnen erläuterte Prinzip der Erfindung ist zur Realisierung beliebiger Multiplikations- und/oder Divisionsoperationen und, bei Kombination mit an sich bekannten Methoden der Frequenzaddition oder -subtraktion, beliebiger mathematischer Operationen mit den Frequenzen der Eingangspulsfolgen möglich. Bei der Verknüpfung von mehr als zwei Eingangsgrößen ist die Erfindung entsprechend mehrstufig realisierbar, indem jeweils zwei oder mehr Eingangsgrößen erfindungsgemäß zu einer Ausgangsgröße und diese mit einer oder mehreren weiteren Eingangsgröße(n) verarbeitet werden. Damit ergibt sich als besonderer Vorteil der Erfindung, daß mathematische Verknüpfungen beliebiger Meßgrößen, die als Pulsfolgen mit entsprechenden Frequenzen vorliegen, im Echtzeit- oder Online-Betrieb berechnet werden können, ohne daß die Rechnung an eine bestimmte Schaltkreistechnik gebunden ist.

Einzelheiten und weitere Vorteile der Erfindung werden aus der Beschreibung der beigefügten Zeichnungen ersichtlich. Es zeigen:

Fig. 1:     ein Schaltbild zur Erläuterung des Prinzips der erfindungsgemäßen Frequenzmultiplikation;

Fig. 2:     ein Zeitablaufbild zur Illustration der erfindungsgemäßen Pulssequenzbildung bei der Frequenzmultiplikation;

Fig. 3: ein Zeitablaufbild zur Illustration der erfindungsgemäßen Pulssequenzbildung bei der Frequenzdivision;

Fig. 4: ein Schaltbild einer veränderten Ausführungsform einer erfindungsgemäßen Multiplikationsschaltung;

Fig. 5: ein Schaltbild einer weiteren veränderten Ausführungsform einer erfindungsgemäßen Multiplikationsschaltung;

Fig. 6: ein Zeitablaufbild zur Illustration der erfindungsgemäßen Multiplikation unter Berücksichtigung einer Offset-Frequenz;

Fig. 7: ein Zeitablaufbild zur Illustration der Funktion der Multiplikationsschaltung gemäß Fig. 4; und

Fig. 8: ein Schaltbild einer erfindungsgemäßen Divisionsschaltung.

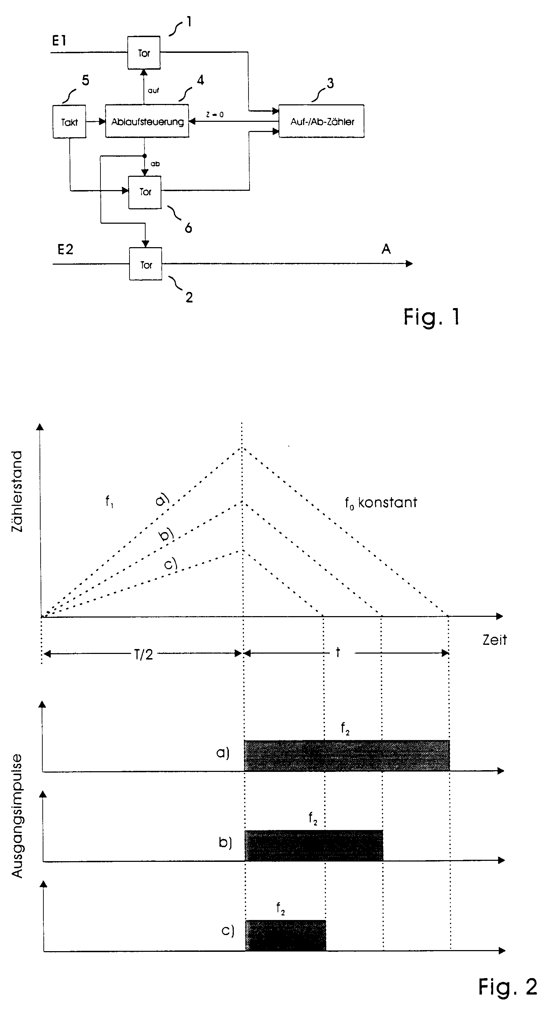

Das Prinzip der Erfindung wird zunächst anhand der Schaltung gemäß Fig. 1 erläutert. Diese Schaltung (oder: Frequenzschaltung) stellt bereits eine vollständige Lösung der oben genannten Aufgabe der Erfindung dar. Die unten beschriebenen, komplexeren Ausführungsformen sind sämtlich von der Schaltung gemäß Fig. 1 abgeleitet. Zur Erläuterung der Schaltungen wird die folgende Begriffsbestimmung gewählt. Die Ausgabe der Ausgangspulssequenz erfolgt zyklisch mit einer Periode T. Die Periode setzt sich aus zwei Ablaufphasen zusammen, die jeweils die Länge einer halben Periode besitzen (T/2). Je nach Ausführungsform wird innerhalb jeder oder jeder zweiten Ablaufphase für eine Sequenzdauer t ($\leq$ T/2) eine Pulssequenz mit einer bestimmten Frequenz ausgegeben. Die erfindungsgemäßen Schaltungen enthalten allgemein bekannte, digitale Torschaltungen, die als Anschlüsse jeweils einen Eingang, einen Ausgang und einen Steueranschluß besitzen. Die Begriffe Eingangs-, Ausgangs- bzw. Steuertor beziehen sich jedoch nicht auf diese Anschlüsse, sondern dienen der Funktionsbezeichnung des jeweiligen Tors.

Die Schaltung gemäß Fig. 1 besitzt zwei Eingänge E1, E2, an die jeweils eine erste bzw. eine zweite Eingangspulsfolge mit den Frequenzen $f_1$ bzw. $f_2$ angelegt sind, und einen Ausgang A, an dem eine Ausgangspulsfolge ausgegeben wird, die im zeitlichen Mittel eine Frequenz $f_A$ aufweist. Der Eingang E1 ist über ein erstes Eingangstor 1 mit einem Zähler 3 verbunden. Der Zähler 3 ist ein Aufwärts-/Abwärtszähler und kann alternativ auch durch zwei getrennte Bausteine gebildet werden, die einen Aufwärts- und einen Abwärtszähler umfassen. Der Eingang E2 ist über ein zweites Eingangstor 2, das gleichzeitig ein Ausgangstor bildet, mit dem Ausgang A verbunden. Das erste und zweite Eingangstor 1, 2 ist jeweils mit einem Steuerkreis 4 verbunden. Der Steuerkreis 4 ist dazu eingerichtet, entweder während der ersten Ablaufphase das erste Eingangstor 1 freizugeben, so daß die erste Eingangspulsfolge am Zähler 3 anliegt, oder während einer Sequenzdauer innerhalb der zweiten Ablaufphase das zweite Eingangstor 2 freizugeben, so daß die zweite Eingangspulsfolge am Ausgang A anliegt. Zur Bestimmung der ersten bzw. zweiten Ablaufphase und der Sequenzdauer erhält der Steuerkreis 4 von einem Taktkreis 5 und vom Zähler 3 Eingangsgrößen. Es ist ferner ein Steuertor 6 vorgesehen, das vom Steuerkreis 4 während der zweiten Ablaufphase zur Verbindung des Taktkreises 5 mit dem Zähler 3 freigegeben wird.

Die genannten Komponenten der Schaltung gemäß Fig. 1 wirken wie folgt zusammen (siehe Fig. 2). Während der ersten Ablaufphase (für eine vorbestimmte konstante Zeit T/2) wird vom Steuerkreis 4 ein Freigabesignal an das erste Eingangstor 1 und ein Sperrsignal an das zweite Eingangstor 2 und das Steuertor 6 gegeben.

Somit liegt die erste Eingangspulsfolge am Zähler 3 an, der für die Zeit T/2 aufwärts zählend geschaltet ist. Der nach Ablauf der Zeit T/2 im Zähler 3 erzielte Zählerstand steht in linearem Zusammenhang mit der Frequenz der Eingangspulsfolge $f_1$, wie dies auch in Fig. 2 (oberes Diagramm) illustriert ist. Falls $f_1$ beispielsweise a) groß, b) mittel oder c) klein ist, wird nach Ablauf der Zeit T/2 jeweils ein hoher, mittlerer oder niedriger Zählerstand erreicht.

Während der zweiten Ablaufphase gibt der Steuerkreis 4 für eine Sequenzdauer t, die von der Frequenz der ersten Eingangspulsfolge abhängt, ein Sperrsignal an das erste Eingangstor 1 und ein Freigabesignal an das zweite Eingangstor 2 und das Steuertor 6. Zu Beginn der zweiten Ablaufphase wird der Zähler 3 abwärts zählend geschaltet. Durch Freigabe des Steuertores 6 wird die Taktpulsfolge mit der Frequenz $f_0$ an den abwärts zählenden Zähler 3 gegeben. Sobald der Zählerstand z = 0 erreicht ist, gibt der Zähler 3 ein Stopsignal als Eingangsgröße an den Steuerkreis 4. Die Sequenzdauer t innerhalb der zweiten Ablaufphase T/2 dauert somit vom Ende der ersten Ablaufphase (T/2) bis zum Erreichen des Zähler-Null-Standes (Stopsignal).

Während der zweiten Ablaufphase wird durch das Freigabesignal an das zweite Eingangstor 2 die zweite Eingangspulsfolge mit der Frequenz $f_2$ an den Ausgang A gelegt. Die Sequenzdauer t hängt linear von der Frequenz $f_1$ der ersten Eingangspulsfolge ab, wie dies in Fig. 2 (untere Diagramme) illustriert ist. Falls die Frequenz $f_1$ groß ist (Fall a)), so wird ein hoher Zählerstand erreicht. Da das Abwärtszählen während der zweiten Ablaufphase entsprechend der konstanten Taktfrequenz $f_0$ erfolgt, dauert es verhältnismäßig lange, bis der Wert z = 0 am Zähler 3 erreicht ist. Solange der Zähler 3 abwärts zählt, erscheint die zweite Eingangspulsfolge mit der Frequenz $f_2$ als Pulssequenz mit einer Sequenzdauer entsprechend $t_2$ am

Ausgang A. Die Sequenzdauer ist bei einer mittleren (Fall b)) bzw. kleinen (Fall c)) Frequenz der Eingangspulsfolge entsprechend kürzer, da jeweils die Zeit zum Abwärtszählen vom mittleren bzw. niedrigen Zählerstand kürzer ist.

Die Taktfrequenz $f_0$ und die Zeit T/2 der ersten Ablaufphase werden so gewählt, daß bei bestimmten erwarteten Frequenzen der Eingangspulsfolgen die Sequenzdauer t kürzer oder gleich der Zeit T/2 der ersten Ablaufphase ist. Nach Ablauf der Sequenzdauer t bleibt bis zum Ende der zweiten Ablaufphase sowohl das erste als auch das zweite Eingangstor 1, 2 gesperrt und der Zähler 3 steht auf Null. Nach Ende der zweiten Ablaufphase beginnt der Steuerkreis mit einem Ablauf gemäß der ersten Ablaufphase, wie dies oben erläutert wurde, d.h. der Zähler 3 zählt mit der Frequenz $f_1$ für die vorbestimmte Zeit T/2 aufwärts usw..

Bei der oben erläuterten Funktion können die ersten und zweiten Eingänge E1 und E2 auch vertauscht sein, wobei jeweils die Indizes 1 und 2 zu tauschen sind. Die Ausgangspulsfolge setzt sich somit aus Pulssequenzen der Frequenz $f_1$ (oder $f_2$) und der Sequenzdauer t zusammen, die mit einer Periode T zyklisch abgegeben werden. Die Periode T der Ausgangspulsfolge setzt sich aus der ersten und zweiten Ablaufphase (jeweils T/2) zusammen. Die (mittlere) Ausgangsfrequenz $f_A$ der Ausgangspulsfolge ist gegenüber der Frequenz $f_2$ (oder $f_1$) der zweiten (oder ersten) Eingangspulsfolge entsprechend dem Faktor t:T/2 reduziert. Da die Sequenzdauer t proportional zur Frequenz $f_1$ (oder $f_2$) der ersten oder zweiten Eingangspulsfolge ist, gilt für die Frequenz $f_A$:

$$f_A \sim f_2 \cdot f_1.$$

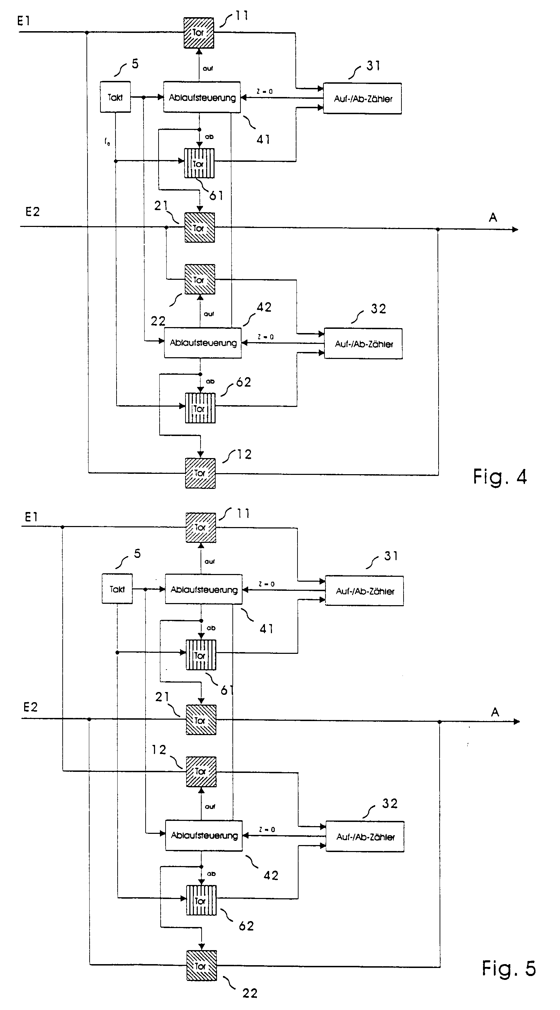

Weitere Modifizierungen der Schaltung gemäß Fig. 1 zur Erzielung einer möglichst gleichmäßigen Ausgangspulsfolge werden unten unter Bezug auf die Figuren 4 und 5 erläutert.

Die Umwandlung der Schaltung gemäß Fig. 1 in eine Divisionsschaltung ergibt sich aus den folgenden Überlegungen. Für den nach der Zeit T/2 erzielten Zählerstand z gilt:

$$z = f_1(T/2) = f_0 t$$

Demzufolge ist die Sequenzdauer t umgekehrt proportional zur Taktfrequenz $f_0$, so daß sich für die Frequenz der Ausgangspulsfolge ergibt:

$$f_A = (f_1 f_2)/f_0.$$

Diese Gleichung zeigt, daß erfindungsgemäß auch mehr als zwei Eingangsgrößen verknüpft werden können, falls z.B. $f_0$ als dritte Eingangsgröße variabel ist. Ein Vertauschen der Größen $f_1$ (oder $f_2$) in der Gleichung und $f_0$ ergibt ferner, daß die Frequenz der Ausgangspulsfolge proportional zum Quotienten $f_2/f_1$ (oder $f_1/f_2$) ist. Wird zum Beispiel zum Tausch von $f_2$ und $f_0$ bei einer Schaltung abweichend von Fig. 1 die Taktschaltung 5 mit dem zweiten Eingangstor 2 und mit dem Steuerkreis 4 und die zweite Eingangspulsfolge mit der Frequenz $f_2$ als Eingangsgröße mit dem Steuertor 6 verbunden, so ist die Frequenz der Ausgangspulsfolge am Ausgang A im zeitlichen Mittel proportional zum Quotienten $f_1/f_2$.

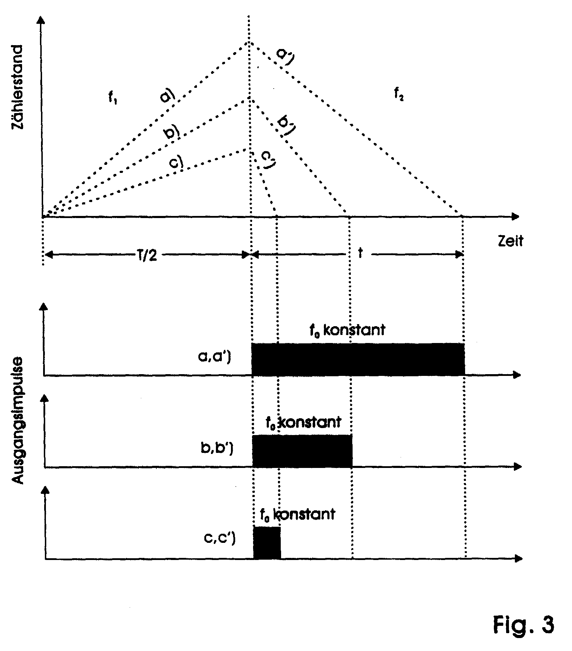

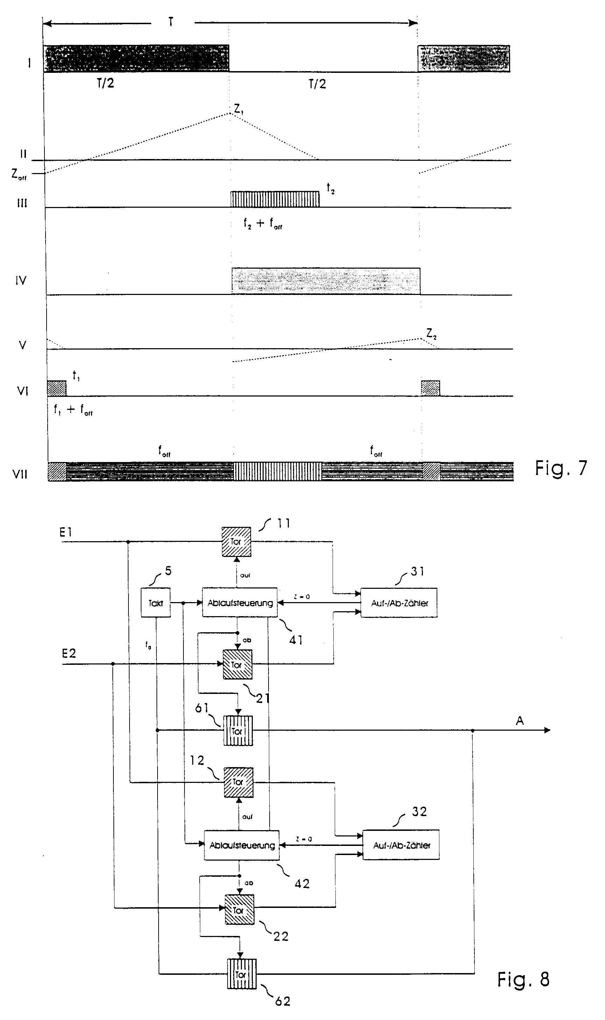

Die Funktion der Divisionsschaltung, deren Einzelheiten unten unter Bezug auf Fig. 8 erläutert werden, ist im Zeitablaufbild der Fig. 3 illustriert.

Wie im Fall der Multiplikationsschaltung erfolgt während einer vorbestimmten Zeit T/2 ein Aufwärtszählen am Zähler bis zu einem zum Wert der Frequenz $f_1$ proportionalen Zählerstand. Wiederum ergeben sich bei einer hohen Frequenz $f_1$ (Fall a)) ein hoher Zählerstand, bei einer mittleren Frequenz $f_1$ (Fall b)) ein mittlerer Zählerstand und bei einer kleinen Frequenz $f_1$ (Fall c)) ein niedriger Zählerstand. Wegen des Tausches der Taktfrequenz und der Frequenz $f_2$ der zweiten Eingangspulsfolge erfolgt bei der Divisionsschaltung das Abwärtszählen jedoch nicht mit der Taktfrequenz $f_0$, sondern mit der Frequenz $f_2$ der zweiten Eingangspulsfolge. Damit ergeben sich Sequenzdauern t, die linear vom Verhältnis $f_1/f_2$ abhängen. Bei einer minimalen Frequenz $f_2$ (Fall a')) wird relativ lange abwärts gezählt, so daß sich hier mit der Frequenz $f_1$ die längste Sequenzdauer t ergibt, die bei den anderen Fällen (Fälle b'), c')) jeweils kürzer ist. Ausgehend von der hohen Frequenz $f_1$ im Fall a) kann jedoch mit einer hohen Frequenz $f_2$ auch eine Sequenzdauer erzielt werden, die kürzer als im Fall b') ist (nicht dargestellt). Da nunmehr die Pulsfolge mit Taktfrequenz auf das zweite Eingangstor 2 (oder Ausgangstor) gegeben wird, besteht die Ausgangspulsfolge aus Pulssequenzen jeweils mit der Taktfrequenz $f_0$.

Wie aus den Fign. 2 und 3 ersichtlich ist, erfolgt die zeitproportionale Ausgabe von Pulssequenzen jeweils nur während des zweiten Teils der Periode T. Während der ersten Ablaufphase T/2 liegt bei einer Schaltung gemäß Fig. 1 (oder einer entsprechenden Divisionsschaltung) am Ausgang kein Signal an. Um auch diesen Zeitbereich auszunutzen, wird gemäß einer bevorzugten Ausführungsform der Erfindung die Multiplikations- oder Divisionsschaltung verdoppelt, wie dies im folgenden unter Bezug auf die Fign. 4, 5 und 8 erläutert wird. Bei der Multiplikationsschaltung ergeben sich wegen der Kommutativität der Multiplikation zwei verschiedene Ausführungsformen, wohingegen die Divisionsschaltung wegen der fehlenden Kommutativität der Quotientenbildung auf eine Realisierung beschränkt ist.

Fig. 4 zeigt eine Multiplikationsschaltung, deren mit der Periode T ausgegebene Ausgangspulsfolge während jeder Periode zwei Pulssequenzen enthält, von denen eine erste Pulssequenz die Frequenz $f_1$ und die Sequenzdauer $t_1$ und eine zweite Pulssequenz die Frequenz $f_2$ und die Sequenzdauer $t_2$ besitzt (Fig.

7). Hierzu besitzt die Schaltung gemäß Fig. 4 zwei Teilschaltungen, von denen die obere Teilschaltung (erstes Eingangstor 11, zweites Eingangstor 21, erster Zähler 31, erster Steuerkreis 41, Taktschaltung 5, erstes Steuertor 61) vollständig der Schaltung gemäß Fig. 1 entspricht. Die untere Teilschaltung (drittes Eingangstor 12, viertes Eingangstor 22, zweiter Zähler 32, zweiter Steuerkreis 42, zweites Steuertor 62) entspricht ebenfalls der Schaltung gemäß Fig. 1, wobei jedoch die Eingänge E1 und E2 vertauscht sind und die Taktschaltung 5 des oberen Schaltungsteils mitgenutzt wird.

Bei der Schaltung gemäß Fig. 4 erfolgt die Ausgabe der Ausgangspulsfolge wiederum als eine sich mit einer Periode T wiederholende Signalfolge mit Pulssequenzen, deren Frequenz jeweils der Frequenz einer Eingangspulsfolge und deren Sequenzdauer der Frequenz der anderen Eingangspulsfolge entspricht. Die Periode T ist in zwei Ablaufphasen (jeweils der Länge T/2) geteilt, in denen jeweils die Sequenzdauern $t_1$ oder $t_2$ der Pulssequenzen liegen.

Die Funktion der Schaltung gemäß Fig. 4 erfolgt analog zu der Funktion der Schaltung gemäß Fig. 1, wobei jedoch in den in Fig. 4 oberen bzw. unteren Schaltungsteilen die Betriebsarten Auf- und Abwärts-Zählen der Zähler 31 bzw. 32 vertauscht sind, so daß während der ersten Ablaufphase eine Pulssequenz mit der Frequenz $f_1$ der ersten Eingangspulsfolge für die Sequenzdauer $t_1$ ausgegeben wird, die proportional zur Frequenz $f_2$ der zweiten Eingangspulsfolge ist. Während der zweiten Ablaufphase erfolgt dann die Ausgabe einer Pulssequenz mit der Frequenz $f_2$ für die Sequenzdauer $t_2$ proportional zur Frequenz $f_1$. Im oberen Schaltungsteil wird mit dem ersten Zähler 31 somit in der ersten Ablaufphase mit der Frequenz $f_1$ aufwärts und in der zweiten Ablaufphase mit der Taktfrequenz $f_0$ abwärts gezählt. Daraus ergibt sich während der zweiten Ablaufphase die Sequenzdauer $t_2$, für die das zweite Eingangstor 21 freigegeben und die Frequenz $f_2$ der zweiten Eingangspulsfolge auf den Ausgang A gegeben wird. In der unteren Teilschaltung zählt der zweite Zähler 32 hingegen während der zweiten Ablaufphase mit der Frequenz $f_2$ aufwärts und während der ersten Ablaufphase mit der Taktfrequenz $f_0$ abwärts, so daß sich während der ersten Ablaufphase die Sequenzdauer $t_1$ ergibt, für die das dritte Eingangstor 12 geöffnet und die erste Eingangspulsfolge mit der Frequenz $f_1$ auf den Ausgang gegeben wird.

Der Wechselbetrieb gemäß Fig. 4, bei dem die Ausgangspulsfolge aus Pulssequenzen besteht, deren Frequenzen abwechselnd den Frequenzen der Eingangspulsfolgen entsprechen, besitzt den Vorteil, daß während der Periode T der Ausgangspulsfolge nicht zu große Pulssequenzlücken entstehen. Es ist jedoch alternativ insbesondere bei großen Frequenzunterschieden möglich, gemäß Fig. 5 ohne den Wechsel der Frequenz der Pulssequenzen der Ausgangspulsfolge zu arbeiten.

Die Schaltung gemäß Fig. 5 besteht wieder aus zwei Teilschaltungen, von denen jede analog zu der Schaltung gemäß Fig. 1 aufgebaut ist. Der obere Schaltungsteil umfaßt ein erstes Eingangstor 11 für die erste Eingangspulsfolge, ein zweites Eingangstor (und simultan Ausgangstor) 21 für die zweite Eingangspulsfolge, einen ersten Zähler 31 (Aufwärts-/Abwärts-Zähler), einen ersten Steuerkreis 41, eine Taktschaltung 5 und ein erstes Steuertor 61. Die Funktion dieses oberen Schaltungsteils ist identisch mit der Funktion der Schaltung gemäß Fig. 1. Somit wird während der zweiten Ablaufphase eine Pulssequenz mit der Frequenz $f_2$ und der Sequenzdauer $t_2$ (proportional zur Frequenz $f_1$) am Ausgang A ausgegeben.

Im unteren Schaltungsteil, bestehend aus dem dritten Eingangstor 12, dem vierten Eingangstor 22, dem zweiten Zähler 32 (Aufwärts-/Abwärts-Zähler), dem zweiten Steuerkreis 42 und dem zweiten Steuertor 62, sind jedoch im Unterschied zu Fig. 4 die Eingänge für die ersten und zweiten Eingangspulsfolgen vertauscht. Damit zählen bei der Ausführungsform gemäß Fig. 5 beide Zähler 31 bzw. 32 während der ersten bzw. zweiten Ablaufphase mit der Frequenz $f_1$ aufwärts und während der zweiten bzw. ersten Ablaufphase mit der Frequenz $f_0$ abwärts. Die Ausgangspulsfolge wird ausschließlich mit Pulssequenzen der Frequenz $f_2$ der zweiten Eingangspulsfolge und Sequenzdauern $t_1 = t_2$ proportional zur Frequenz $f_1$ der ersten Eingangspulsfolge ausgegeben.

Gemäß einer weiteren Ausführungsform der Erfindung wird bei der Multiplikation bzw. Division von Frequenzen zusätzlich eine Offset-Frequenz berücksichtigt. Bei der Übertragung von Signalen, die durch eine Frequenz dargestellt werden, ist es üblich, mit einer Offset-Frequenz zu arbeiten. Diese wird benutzt, um einen Bezugswert für das zu übertragende Meßsignal zu erhalten. Es wird beispielsweise bei der Übertragung von Pulsfolgen mit Frequenzen proportional zu Spannungsmeßwerten auch eine Offset-Frequenz übertragen, die dem Spannungswert Null als Bezugswert entspricht. Die Offset-Frequenz wird berücksichtigt, indem vor jedem Zählvorgang die Offset-Frequenz von der jeweiligen Frequenz der gezählten Eingangspulsfolge abgezogen wird. Hierzu wird der Zähler zu Beginn der jeweiligen Ablaufphase nicht auf Null, sondern auf einen der Offset-Frequenz entsprechenden negativen Wert voreingestellt.

Der negative Wert wird so zu Beginn jeder Ablaufphase voreingestellt, daß beim Aufwärtszählen während einer Ablaufphase ohne eine Eingangspulsfolge (f = 0) der Zählerstand Null erzielt wird.

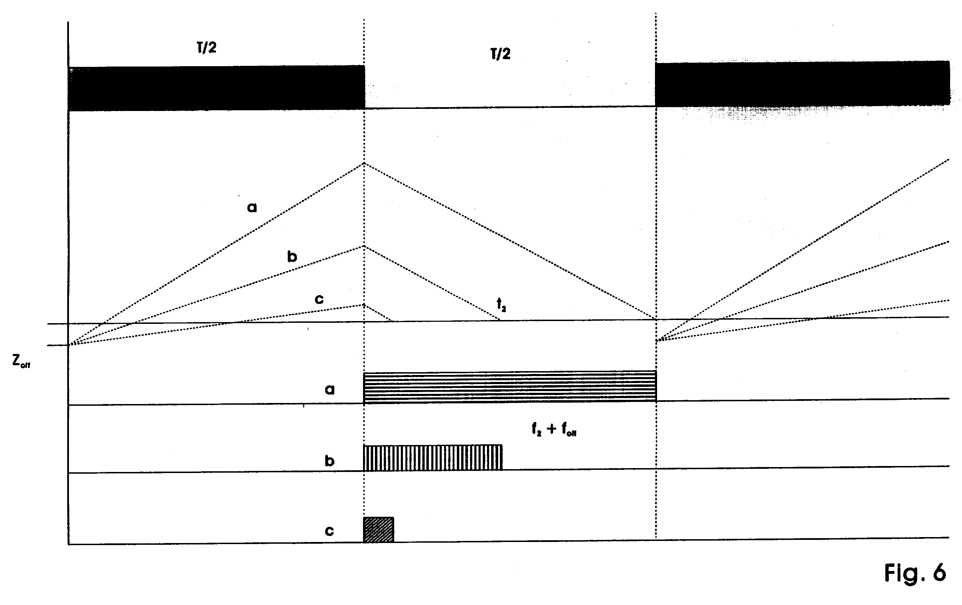

Nach der Frequenzmultiplikation (Erzeugung der Ausgangspulsfolge) kann dann die Offset-Frequenz im Ergebnis wieder durch einfache Frequenzaddition berücksichtigt werden. Die Berücksichtigung der Offset-Frequenz ist in Fig. 6 illustriert. Schaltungsteile zur Addition oder Subtraktion der Offset-Frequenz sind in keiner der Zeichnungen dargestellt. Um das Multiplikations- (oder Divisions-) -ergebnis am Ausgang A nicht zu verfälschen, wird während der Ablaufphasen außerhalb der Sequenzdauern $t_{1/2}$ laufend eine Pulsfolge mit der Offset-Frequenz $f_{off}$ ausgegeben.

Die hierfür vorgesehenen Schaltungsteile sind nicht dargestellt.

Fig. 6 zeigt ein Zeitablaufbild gemäß Fig. 2, wobei aus Übersichtlichkeitsgründen nur die Funktion einer Teilschaltung gezeigt ist. Im obersten Teil von Fig. 6 ist der Wechsel der ersten (Balken) und zweiten (kein Balken) Ablaufphasen bei der Ausgabe der Ausgangspulsfolge dargestellt. Darunter ist wiederum der Zählerstand für drei Fälle hoher (a), mittlerer (b) oder niedriger (c) Frequenz $f_1$ der Eingangspulsfolge dargestellt. Der Zählvorgang beginnt bei einem voreingestellten, negativen Wert $z_{off}$. Dadurch wird der nach T/2 erreichte Zählerstand gegenüber einem Betrieb ohne Offset-Frequenz verringert, so daß die Sequenzdauer $t_2$ der ausgegebenen Pulssequenz entsprechend verkürzt wird. Während der Sequenzdauer $t_2$ wird eine Pulssequenz mit einer Frequenz $(f_2 + f_{off})$ ausgegeben. Anschließend wiederholt sich der periodisch wiederkehrende Zählvorgang.

Fig. 7 zeigt ein Zeitablaufbild für eine vollständige Multiplikationsschaltung gemäß Fig. 4. Die oberen Zeitabläufe (I, II, III) entsprechen der Darstellung gemäß Fig. 6 für eine z.B. mittlere Frequenz $f_1$ der ersten Eingangspulsfolge. Eine entsprechende Darstellung ergibt sich für die Zeitabläufe (IV, V, VI) des zweiten (unteren) Schaltungsteils, die jedoch gegenüber dem Betrieb des ersten (oberen) Schaltungsteils um eine halbe Periode der Ausgangspulsfolge T (Zeitablauf VII) versetzt sind. Während der ersten Ablaufphase zählt der erste Zähler aufwärts (I). Dementsprechend wächst der Zählerstand von einem negativen Wert $z_{off}$ zu einem der Frequenz $f_1$ proportionalen Endwert $z_1$ (II). Gleichzeitig zählt der zweite Zähler mit der Taktfrequenz $f_0$ abwärts (V), so daß eine Pulssequenz mit der Frequenz $(f_1 + f_{off})$ für die Sequenzdauer $t_1$ (VI) erzeugt wird. In der zweiten Ablaufphase wird im ersten Schaltungsteil von $z_1$ abwärts gezählt (II), so daß für die Sequenzdauer $t_2$ die Pulssequenz mit der Frequenz $(f_2 + f_{off})$ ausgegeben wird (III).

Gleichzeitig zählt der zweite Zähler aufwärts (IV), so daß sich ein vom negativen Offset-Wert Zählerstand $z_{off}$ bis $z_2$ anwachsender Zählerstand ergibt (V). Am Ausgang A erscheint die Ausgangspulsfolge (VII) mit periodisch wiederkehrenden Pulssequenzen mit der Frequenz $(f_1 + f_{off})$ für die Sequenzdauer $t_1$ bzw. $(f_2 + f_{off})$ für die Sequenzdauer $t_2$. Für die Zwischenzeiten (Differenz zwischen T/2 und $t_1$ bzw. $t_2$) wird die Offset-Frequenz $f_{off}$ ausgegeben.

Fig. 8 zeigt eine vollständige Divisionsschaltung, die der oben erläuterten, von der Schaltung gemäß Fig. 1 abgeleiteten Divisionsschaltung entspricht. Die Divisionsschaltung gemäß Fig. 8 umfaßt einen oberen Schaltungsteil mit einem ersten Eingangstor 11, einem ersten Zähler 31 (Aufwärts-/Abwärts-Zähler), einem ersten Steuerkreis 41, einer Taktschaltung 5 und einem ersten Steuertor 61 (das gleichzeitig ein Ausgangstor darstellt). Der obere Schaltungsteil entspricht vollständig der Schaltung gemäß Fig. 1, wobei jedoch wie oben beschrieben die Eingänge der Frequenz $f_2$ der zweiten Eingangspulsfolge und der Taktfrequenz $f_0$ vertauscht sind. Während einer ersten Ablaufphase der Periode T zählt der erste Zähler 31 mit der Frequenz $f_1$ der ersten Eingangspulsfolge aufwärts. Von dem erreichten Zählerstand wird während der zweiten Ablaufphase mit der Taktfrequenz $f_2$ bis zum Zählerstand $z = 0$ abwärts gezählt. Während des Abwärtszählens wird vom Steuerkreis 41 das Ausgangstor 61 freigegeben, so daß für die Sequenzdauer $t_2$ proportional zu $f_1/f_2$ eine Pulssequenz mit der Taktfrequenz $f_0$ am Ausgang A erscheint.

Der untere Schaltungsteil der Schaltung gemäß Fig. 8 umfaßt ein drittes Eingangstor 12, einen zweiten Zähler 32 (Aufwärts-/Abwärts-Zähler), einen zweiten Steuerkreis 42 und ein zweites Steuertor 62 (das wiederum ein Ausgangstor ist). Die Funktion des unteren Schaltungsteils entspricht der Funktion des oberen Schaltungsteils, jedoch mit phasenversetztem Zeitablauf. Während der erste Zähler 31 aufwärts zählt, zählt der zweite Zähler 32 abwärts, so daß für eine Sequenzdauer $t_1 = t_2$ proportional zu $f_1/f_2$ das Ausgangstor 62 geöffnet und eine Pulssequenz mit der Taktfrequenz $f_0$ an den Ausgang A gegeben wird. Das Zeitverhalten entspricht in jeder Ablaufphase jeweils dem in Fig. 3 dargestellten Ablauf.

Die Berücksichtigung von Offset-Größen ist bei der Divisionsschaltung analog zum oben erläuterten Vorgehen wie bei der Multiplikationsschaltung realisierbar. Eine Pulssequenzausgabe mit abwechselnd sich ändernden Frequenzen der Pulssequenzen wie bei Fig. 4 ist im Falle der Divisionsschaltung nicht möglich, da die Division nicht umkehrbar ist.

Die Schaltung gemäß der Erfindung wird mit üblichen Logikbausteinen aufgebaut. Die Betriebsgrößen, insbesondere die Taktfrequenz $f_0$, die Periode der Ausgangspulsfolge T, die Längen der Ablaufphasen, die Offset-Frequenz und ggf. die Zählerstände $z_1$, $z_2$ werden anwendungsabhängig vorgegeben. Die Taktfrequenz $f_0$ ist größer oder gleich der höchsten Eingangsfrequenz (mit Offset-Frequenz). Es kann eine Schalteinrichtung vorgesehen sein, mit der die Taktfrequenz $f_0$ anwendungsabhängig manuell oder in Reaktion auf die Zustände der Ausgangspulsfolge automatisch umgeschaltet wird. Es ist beispielsweise möglich, die Schalteinrichtung zum Umschalten der Taktfrequenz im Verhältnis 1 : 10 : 100 einzurichten. Die Taktfrequenz und/oder Zählerstände werden ferner so gewählt, daß die Sequenzdauern $t_1$, $t_2$ so lang sind, daß im Rahmen der geforderten Genauigkeit genügend Pulse der Eingangspulsfolgen gezählt werden. Andererseits müssen die Sequenzdauern genügend kurz sein, daß die Zähler nicht überlaufen. Außerdem sollte die Periode T der Ausgangspulsfolge so gewählt sein, daß die Schwankungen der Ausgangspulsfolge im Rahmen der geforderten Genauigkeit und Stabilität genügend gering sind.

Die Umwandlung der Ausgangsgröße, die durch die mittlere Frequenz der Ausgangspulsfolge als Produkt oder Quotient von mindestens zwei Eingangsgrößen erzeugt worden ist, erfolgt mit geeigneten Digital-Analog-Wandlereinrichtungen. Beispielsweise kann ein D/A-Wandler vorgesehen sein, der so abgeglichen ist, daß bei der Offset-Frequenz $f_{off}$ ein Referenzanalogwert (z.B. Spannung gleich 0) ausgegeben wird. Dieser D/A-Wandler wird beispielsweise durch einen Tiefpaßfilter gebildet, dessen Ausgangssignal im zeitlichen Mittel ausgewertet wird. Alternativ ist es möglich, die Ausgangspulsfolge auf einen weiteren Zähler zu geben, der jeweils periodisch für definierte Zeitintervalle die Pulse der Eingangspulsfolge zählt. Der jeweils erzielte Zählerstand wird mit einem schnellen D/A-Wandler in eine Analoggröße umgesetzt.

Die Erfindung besitzt die folgenden Vorteile. Die gesamte Schaltung ist mit herkömmlichen Logikbausteinen realisierbar. Die Multiplikation oder Division von Eingangsfrequenzen erfolgt mit hoher Geschwindigkeit, so daß Regelungen im Echtzeitbetrieb möglich sind. Die Schaltungen erlauben eine einfache Erweiterbarkeit zur Berechnung beliebiger mathematischer Größen aus den Eingangsgrößen. Dies betrifft sowohl additive und multiplikative Verknüpfungen als auch kompliziertere Funktionen, die durch Reihendarstellungen (ggf. mit Reihenabbruch im Rahmen der geforderten Genauigkeit) auf additive bzw. multiplikative Verknüpfungen rückführbar sind. Die Erfindung ist bei allen Echtzeitoperationen variabler Meßgrößen, die als Frequenzsignale vorliegen, einsetzbar. So ergibt beispielsweise, falls die erste Eingangspulsfolge ein Spannungssignal und die zweite Eingangspulsfolge ein zugehöriges Stromsignal repräsentieren, die Multiplikation eine Ausgangspulsfolge, deren Frequenz charakteristisch für die elektrische Leistung ist. Sie kann auch zur Bildung z.B. eines Quadrierers vorgesehen sein, wenn auf beide Eingänge der Schaltung dieselbe Eingangspulsfolge gelegt wird. Die Erfindung ist nicht auf bestimmte Pulsformen beschränkt, sondern mit allen zählbaren Pulsfolgen unabhängig von Amplitudenschwankungen anwendbar.

## Patentansprüche

1. Verfahren zur Bildung einer Ausgangspulsfolge mit einer Frequenz $f_A$, die proportional zum Produkt der Frequenzen $f_1$ und $f_2$ einer ersten und einer zweiten Eingangspulsfolge ist, wobei die Ausgangspulsfolge als sich mit einer Periode T wiederholende Signalfolge gebildet wird, die Pulssequenzen einer Sequenzdauer t enthält, die die Frequenz $f_1$ der ersten Eingangspulsfolge besitzen und deren Sequenzdauer t proportional zur Frequenz $f_2$ der zweiten Eingangspulsfolge ist.

2. Verfahren gemäß Anspruch 1, bei dem während der Periode T zwei Pulssequenzen mit der Frequenz $f_1$ und jeweils der Sequenzdauer t proportional zur Frequenz $f_2$ der zweiten Eingangspulsfolge ausgegeben werden.

3. Verfahren gemäß Anspruch 1, bei dem während einer ersten Ablaufphase der Periode T die Pulssequenz mit der Frequenz $f_1$ der ersten Eingangspulsfolge für eine erste Sequenzdauer $t_1$ proportional zur Frequenz $f_2$ der zweiten Eingangspulsfolge und während einer zweiten Ablaufphase der Periode T eine Pulssequenz mit der Frequenz $f_2$ der zweiten Eingangspulsfolge für eine zweite Sequenzdauer $t_2$ proportional zur Frequenz $f_1$ der ersten Eingangspulsfolge ausgegeben wird.

4. Verfahren gemäß einem der vorhergehenden Ansprüche, bei dem die Frequenzen $f_1$ und $f_2$ jeweils mit einer Offset-Frequenz $f_{off}$ additiv überlagert sind.

5. Verfahren gemäß einem der vorhergehenden Ansprüche, bei dem die Sequenzdauern $t_1$ bzw. $t_2$ jeweils der Zeit entsprechen, die ein Zähler (3, 31, 32) benötigt, um von einem Zählerstand, der nach Aufwärtszählen der Pulse einer der Eingangspulsfolgen für eine vorbestimmte Zeit T/2 erreicht worden ist, beim Abwärtszählen mit einer Referenzfrequenz $f_0$ zu einem vorbestimmten Zählerstand Null zu gelangen.

6. Verfahren zur Bildung einer Ausgangspulsfolge mit einer Frequenz $f_A$, die proportional zum Quotienten der Frequenzen $f_1$ und $f_2$ einer ersten und einer zweiten Eingangspulsfolge ist, wobei die Ausgangspulsfolge als sich mit einer Periode T wiederholende Signalfolge gebildet wird, die in jeder Periode T mindestens eine Pulssequenz einer Sequenzdauer enthält, die eine Referenzfrequenz $f_0$ besitzt und deren Sequenzdauer proportional zum Verhältnis der Frequenzen $f_1/f_2$ der ersten und zweiten Eingangspulsfolgen ist.

7. Verfahren gemäß Anspruch 6, bei dem während der Periode T zwei Pulssequenzen mit der Frequenz $f_0$ und jeweils der Sequenzdauer proportional zum Verhältnis der Frequenzen $f_1/f_2$ ausgegeben werden.

8. Verfahren gemäß Anspruch 6 oder 7, bei dem die Frequenzen $f_1$ und $f_2$ der Eingangspulsfolgen mit einer Offset-Frequenz $f_{off}$ additiv überlagert sind.

9. Verfahren gemäß Anspruch 6, bei dem die Sequenzdauer t der Zeit entspricht, die ein Zähler (3, 31, 32) benötigt, um von einem Zählerstand, der durch Aufwärtszählen der ersten Eingangspulsfolge für eine vorbestimmte Zeit erreicht wird, durch Abwärtszählen mit der Frequenz $f_2$ der zweiten Eingangspulsfolge bis zu einem vorbestimmten Zählerstand Null zu gelangen.

10. Schaltung zur Frequenzmultiplikation mit einem ersten Eingangstor (1, 11) für eine erste Eingangspulsfolge, einem zweiten Eingangstor (2, 21) für eine zweite Eingangspulsfolge und einem ersten Steuertor (6, 61), die so mit einem ersten Steuerkreis (4, 41) verbunden sind, daß in einer ersten Ablaufphase das erste Eingangstor (1, 11) für eine vorbestimmte Zeit T/2 mit einem ersten Zähler (3, 31) und während einer zweiten Ablaufphase für eine erste Sequenzdauer das zweite Eingangstor (2, 21) mit einem Ausgang (A) und eine Taktschaltung (5) über das Steuertor (6, 61) mit dem ersten Zähler (3, 31) verbunden sind, wobei die erste Sequenzdauer proportional zur Frequenz der am ersten Eingangstor (1, 11) anliegenden ersten Eingangspulsfolge ist.

11. Schaltung gemäß Anspruch 10, die ferner ein drittes Eingangstor (12) für die erste Eingangspulsfolge, ein viertes Eingangstor (22) für die zweite Eingangspulsfolge und ein zweites Steuertor (62) enthält, die so mit einem zweiten Steuerkreis (42) verbunden sind, daß in der zweiten Ablaufphase das vierte Eingangstor (22) für eine vorbestimmte Zeit T/2 mit einem zweiten Zähler (32) und während der ersten Ablaufphase für eine zweite Sequenzdauer das dritte Eingangstor (12) mit dem Ausgang (A) und die Taktschaltung (5) über das zweite Steuertor (62) mit dem zweiten Zähler (32) verbunden sind, wobei die zweite Sequenzdauer proportional zur Frequenz der am vierten Eingangstor (22) anliegenden zweiten Eingangspulsfolge ist.

12. Schaltung gemäß Anspruch 10, die ferner ein drittes Eingangstor (12) für die erste Eingangspulsfolge, ein viertes Eingangstor (22) für die zweite Eingangspulsfolge und ein zweites Steuertor (62) enthält, die so mit einem zweiten Steuerkreis (42) verbunden sind, daß in der zweiten Ablaufphase das dritte Eingangstor (12) für eine vorbestimmte Zeit T/2 mit einem zweiten Zähler (32) und während der ersten Ablaufphase für eine zweite Sequenzdauer das vierte Eingangstor (22) mit dem Ausgang (A) und die Taktschaltung (5) über das zweite Steuertor (62) mit dem zweiten Zähler (32) verbunden sind, wobei die zweite Sequenzdauer proportional zur Frequenz der am dritten Eingangstor (12) anliegenden ersten Eingangspulsfolge ist.

13. Schaltung zur Frequenzdivision mit einem ersten Eingangstor (1, 11) für eine erste Eingangspulsfolge, einem zweiten Eingangstor (2, 21) für eine zweite Eingangspulsfolge und einem Steuertor (6, 61), die so mit einem Steuerkreis (4, 41) verbunden sind, daß in einer ersten Ablaufphase das erste Eingangstor (1) für eine vorbestimmte Zeit T/2 mit einem ersten Zähler (3) und während einer zweiten Ablaufphase für eine erste Sequenzdauer das zweite Eingangstor (2, 21) mit dem Zähler (3, 31) und eine Taktschaltung (5) über das Steuertor (6, 61) mit einem Ausgang (A) verbunden sind, wobei die erste Sequenzdauer proportional zum Verhältnis der Frequenzen der ersten und zweiten Eingangspulsfolgen ist, die am ersten bzw. zweiten Eingangstor anliegen.

14. Schaltung gemäß Anspruch 13, die ferner ein drittes Eingangstor (12) für die erste Eingangspulsfolge, ein viertes Eingangstor (22) für die zweite Eingangspulsfolge und ein zweites Steuertor (62) enthält, die so mit einem zweiten Steuerkreis (42) verbunden sind, daß in der zweiten Ablaufphase das dritte Eingangstor (12) für eine vorbestimmte Zeit T/2 mit einem zweiten Zähler (32) und während der ersten Ablaufphase für eine zweite Sequenzdauer die Taktschaltung (5) über das zweite Steuertor (62) mit dem Ausgang (A) und das vierte Eingangstor (22) mit dem zweiten Zähler (32) verbunden sind, wobei die zweite Sequenzdauer proportional zum Verhältnis der Frequenzen der ersten und zweiten Eingangspulsfolgen ist, die am ersten bzw. zweiten Eingangstor anliegen.

Fig. 1

Fig. 2

Fig. 3

Fig. 4

Fig. 5

Fig. 6

Fig. 7

Fig. 8